# FASCICULE DE BREVET EUROPEEN

(11) **EP 2 764 253 B1**
(45) Date de publication et mention de la délivrance du brevet: **19.08.2015**
(21) Numéro de dépôt: 12775777.1
(22) Date de dépôt: 27.09.2012
(51) Int. Cl.: F04D 27/00, F04D 29/42

(54) **COMPRESSEUR CENTRIFUGE EQUIPE D'UN MARQUEUR DE MESURE D'USURE ET PROCEDE DE SUIVI D'USURE UTILISANT CE MARQUEUR**
KREISELVERDICHTER MIT EINER MARKIERUNG ZUR VERSCHLEISSMESSUNG UND VERFAHREN ZUR VERSCHLEISSMESSUNG MITHILFE DIESER MARKIERUNG
CENTRIFUGAL COMPRESSOR PROVIDED WITH A MARKER FOR MEASURING WEAR AND A METHOD OF MONITORING WEAR USING SAID MARKER

(30) Priorité: 07.10.2011 FR 1159071
(43) Date de publication de la demande: 13.08.2014
(73) Titulaire: Turbomeca, 64511 Bordes (FR)
(72) Inventeur: JACTAT, Paul-Etienne, 64000 Pau (FR); LEBRUSQ, Pascal, 64320 Idron (FR); SARRAMEA, Jérôme, 64122 URRUGNE (FR); SCUILLER, Lionel, 64140 Billère (FR)
(74) Mandataire: Bringer, Mathieu
(86) Numéro de dépôt international: PCT/FR2012/052189
(87) Numéro de publication internationale: WO 2013/050688

(56) Documents cités:
- FR-A1- 2 938 651
- FR-A1- 2 942 267
- US-A- 5 975 845

## Description

### DOMAINE TECHNIQUE

L'invention se rapporte à un compresseur centrifuge de turbine à gaz, équipé d'un marqueur de suivi d'usure, ainsi qu'à un procédé de mesure d'usure de compresseur centrifuge utilisant un tel marqueur.

L'invention s'applique en particulier aux turbomoteurs d'hélicoptères, notamment aux turbomoteurs à compresseurs mono ou bi-étages.

L'usure par érosion affecte les pièces principales de la veine air d'un moteur équipé d'au moins un compresseur centrifuge avec une entrée d'air radiale. Les pièces du compresseur, et les zones de ces pièces les plus exposées à l'érosion, sont respectivement: le rouet, en particulier les bords d'attaque des pales principales ; le diffuseur radial, notamment les bords d'attaque de ses aubes ; et le couvercle du rouet, en particulier au niveau du coude du couvercle.

L'invention se rapporte plus généralement au domaine du suivi du bon fonctionnement d'une turbine, ce suivi nécessitant la détection de l'érosion provoquée en général par ingestion de corps étrangers dans la veine, en particulier du sable.

### ÉTAT DE LA TECHNIQUE

Une solution connue est de mesurer l'érosion d'un compresseur en bord d'attaque des pales principales du rouet, en particulier par endoscopie. Le document de brevet FR 2 938 651 décrit un tel procédé de mesure d'usure du bord d'attaque d'une pale rotative de rouet. Une marque permanente est réalisée à une distance déterminée du bord d'attaque et cette distance est suivie par un endoscope positionné dans un champ de vision incluant la marque et une partie du bord d'attaque. Des moyens de traitement des images fournies par l'endoscope permettent de déduire la position du bord d'attaque par rapport à la marque.

Cependant, la mesure du recul des bords d'attaque des pales principales de rouet est entachée d'une forte imprécision et l'accès aux pales est difficile sans dépose du moteur. De plus, la mise en place de témoin sur des pièces rotatives est difficile à mettre en oeuvre en raison des contraintes élevées du rouet en fonctionnement. En outre, on ne dispose pas de référence fiable pour mesurer la position du témoin par rapport à un bord d'attaque de pale lorsque ce dernier est totalement soumis à l'érosion. Le document FR 2 942 267 divulgue également l'usage d'un témoin d'usure placé sur le rouet.

De manière générale, ces imprécisions sur la caractérisation de l'usure des pièces peuvent entraîner un diagnostic erroné sur l'état des pièces, et une dépose prématurée ou tardive du moteur. De telles imprécisions ne permettent pas d'élaborer une maintenance ciblée par pièce.

### EXPOSÉ DE L'INVENTION

L'invention vise à s'affranchir de ces inconvénients, en particulier elle vise à réaliser une mesure précise de l'érosion des compresseurs, sans dépose moteur, ainsi qu'une mise en place aisée. Pour ce faire, bien que l'usure des couvercles de compresseur ne soit pas critique ce qui, *a priori*, n'incite pas à les utiliser comme marqueur, il a été remarqué qu'implanter un témoin dans le couvercle peut être utile pour caractériser l'usure. En effet, le coude de couvercles s'érode et le suivi de cette érosion par un marquage adapté permet une telle caractérisation de l'usure, non seulement des couvercles, mais également des pièces adjacentes des compresseurs, en particulier des pales de rouet.

Plus précisément, la présente invention a pour objet un compresseur centrifuge de turbine à gaz à entrée d'air radiale. Un tel compresseur comporte un rouet équipé de pales et un couvercle d'écoulement de flux d'air dans les pales. Le couvercle, qui est recouvert d'un revêtement abradable, présente une zone annulaire de coude dans une partie sensiblement médiane. Dans cette zone de coude, au moins un creux de marquage de profondeur déterminée, dit marqueur, est usiné dans le revêtement abradable. De préférence, ce compresseur constitue le premier étage de compression d'un turbomoteur mono, bi ou multi-étage(s).

Selon des particularités avantageuses :
- au moins deux, de préférence au moins trois groupes d'au moins deux, de préférence au moins trois marqueurs, sont répartis le long de la zone de coude du couvercle ;
- les marqueurs de chaque groupe ont des profondeurs initiales différentes et quantifiés ;
- lès marqueurs de chaque groupe peuvent être en alignement dans ladite zone de coude et leur implantation choisie entre une méridienne, un rayon et une ligne inclinée entre méridienne et rayon ;
- les marqueurs sont de forme choisie entre une forme cylindrique, de préférence un lamage à base circulaire ou oblong, de calotte sphérique, de forme conique, et de rainurage.

L'invention se rapporte également à un procédé de suivi d'usure d'un compresseur centrifuge du type décrit ci-dessus. Dans ce procédé :
- au moins un marquage est réalisé par usinage d'au moins un creux de profondeur déterminée dans le revêtement abradable du coude du couvercle ;
- des examens par endoscopie sont successivement effectués dans le temps ;
- à chaque examen, un endoscope est introduit dans le compresseur et une extrémité active de l'endoscope est positionnée en regard du ou des marquages pour fournir un signal d'image des marquages;
- un traitement du signal endoscopique fournit un nombre de marquage(s) restant(s) et un critère de décision de dépose moteur est appliqué en fonction de ce nombre et de données d'usure comparatives.

Selon des modes de réalisation préférés :
- les marquages présentent des profondeurs différentes et la différence entre deux profondeurs les plus proches est quantifiée en correspondance avec un degré d'avancement d'usure calibré ;
- les marquages sont régulièrement répartis sur la circonférence du coude du couvercle, individuellement ou par groupes d'au moins deux marquages, de préférence au moins trois ;
- une comparaison entre les dénombrements de marqueurs restants lors d'examens successifs fournit une mesure de la vitesse d'érosion et un état d'avancement de l'usure du couvercle ainsi que, par extrapolation à partir de données mémorisées relatives à des corrélations d'usure entre les pièces de compresseur, celui des autres pièces du compresseur ;
- le critère de décision compare, à chaque examen, le nombre de marquages restants à un nombre critique établi en fonction des données mémorisées et le moteur est déposé pour le remplacement des pièces usées lorsque le nombre critique est atteint.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue en coupe partielle d'un turbomoteur d'hélicoptère comportant un compresseur selon l'invention ;
- la figure 2, une vue axiale partielle d'un couvercle selon l'invention comportant deux groupes de trois marqueurs alignés sur un rayon et sur une méridienne du coude du couvercle ;
- la figure 3, une vue générale axiale d'un exemple de couvercle selon l'invention comportant trois groupes de trois marqueurs alignés sur une méridienne, et
- les figures 4 et 5, des vues en coupe et perspective de trois marqueurs d'un des groupes précédents, et
- la figure 6, un exemple d'organigramme des étapes de mise en oeuvre du procédé de mesure d'usure selon l'invention.

### DESCRIPTION DÉTAILLÉE

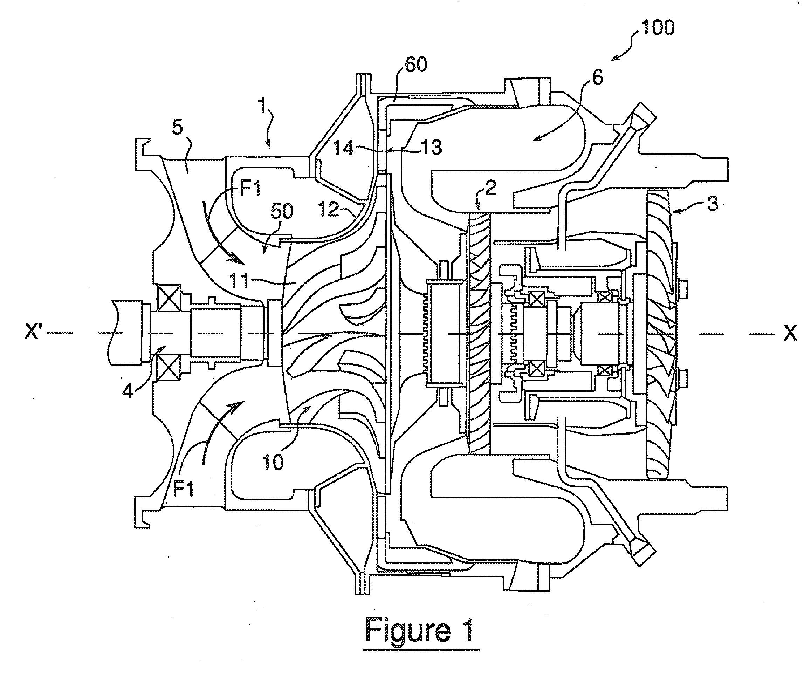

Le turbomoteur 100 illustré par la vue en coupe de la figure 1 comporte, sensiblement de symétrie axiale autour de l'axe central X'X : un compresseur centrifuge 1 ; des turbines 2 et 3 d'entraînement du compresseur 1 et des axes de puissance de l'hélicoptère (hélice, boîtier de transmission, etc.) via un arbre traversant 4 ; une entrée radiale 5 d'un manchon de circulation 50 d'un flux d'air frais F1 et une chambre de combustion 6.

Plus précisément, le compresseur centrifuge 1 comprend principalement un rouet de compression 10 muni de pales 11 et alimenté par l'air F1, un couvercle 12 limitant un canal annulaire dans lequel s'écoule le flux F1, et un diffuseur radial 13 à ailettes 14.

En fonctionnement, le flux d'air F1 est d'abord aspiré dans l'entrée d'air frais 5, puis comprimé entre les pales 11 du rouet et le couvercle 12. Le flux comprimé F1 sort ensuite radialement du rouet 10.

Le flux F1 passe alors par le diffuseur radial 13, formé à la périphérie du compresseur 1, pour être redressé par les aubes courbes 14 et acheminé vers des canaux 60 d'entrée de la chambre de combustion 6.

En fonctionnement, le flux d'air F1 qui contient des particules étrangères, par exemple des grains de sable, va éroder les principales pièces du compresseur : les pales en rotation 11 du rouet, le couvercle 12 et les aubes 14 du diffuseur.

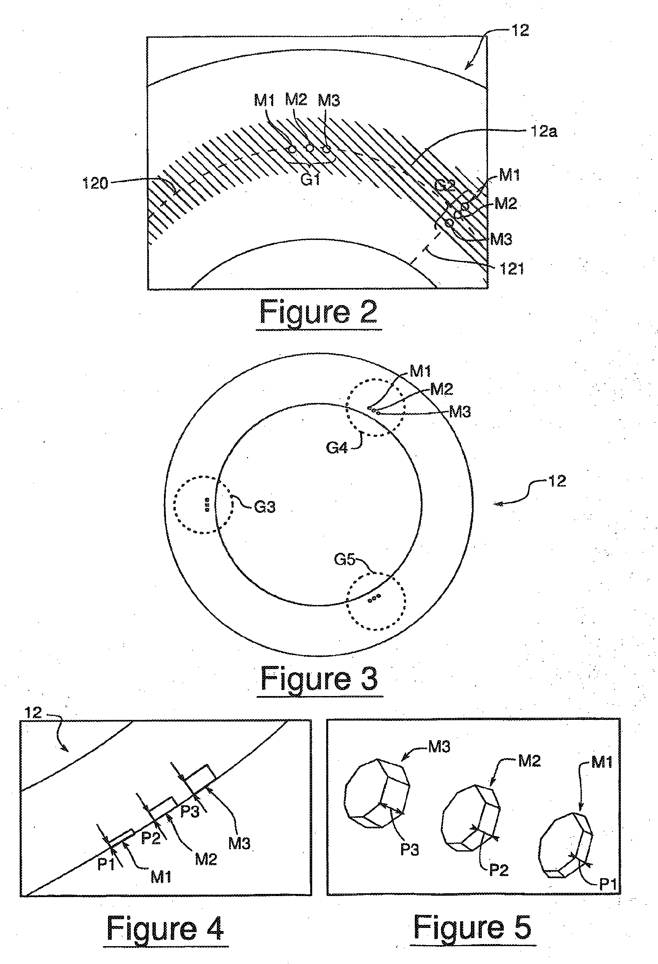

Afin de mesurer l'état d'avancement de cette érosion, le couvercle 12 est usiné pour présenter des marqueurs en creux comme illustré par la figure 2. Le couvercle 12 présente dans sa partie centrale une zone annulaire formant un coude 12a. Dans ce coude 12a, un premier groupe G1 de trois marqueurs M1, M2, et M3 ont été usinés. Les marqueurs du groupe G1 sont alignés sur une méridienne 120 (représentée en traits pointillés) du coude 12a. Un autre exemple d'alignement des marqueurs M1 à M3 est également illustré. Dans cet alignement, les marqueurs M1 à M3 forment un groupe G2 le long d'un rayon 121 (représentés en traits pointillés) du coude 12a:

Les marqueurs ont ici une forme cylindrique à base circulaire. Alternativement d'autres formes sont possibles : un lamage à base oblong, une calotte sphérique, une forme conique, ou un rainurage

De manière générale, les marqueurs d'un même groupe sont suffisamment rapprochés, à moins de 10 mm, pour être aptes à pouvoir subir le même type d'érosion. De plus, les marqueurs ont une ouverture maximale inférieure à environ 1 mm de manière à ne pas être bouchés par l'ingestion de corps étrangers, en particulier de grains de sable.

Le couvercle 12 est recouvert d'un revêtement en matériau abradable connu, d'épaisseur de quelques millimètres, afin d'éviter un contact avec les pales qui seraient nuisible au bon fonctionnement. Les marqueurs sont usinés dans ce matériau abradable.

Or le couvercle est la pièce est érodé par le flux F1 et en particulier le coude 12a. Sur la figure 2, le coude 12a forme une zone érodée assombrie par rapport au reste du coude. L'usure du couvercle et de son coude en particulier n'a pas de conséquence sur le bon fonctionnement du moteur.

En référence à la vue générale axiale de la figure 3, un exemple de couvercle 12 selon l'invention comporte trois groupes G3 à G5 de trois marqueurs chacun, identiques aux marqueurs M1 à M3 précédemment décrits. Les marqueurs sont alignés sur la méridienne 120 et les groupes G3 à G5 sont régulièrement répartis à 120° sur la circonférence du coude 12a du couvercle 12. Alternativement, les marqueurs M1 à M3 peuvent être alignés sur un rayon 121 comme illustré à la figure 2.

Dans l'exemple, les marqueurs ont une forme sensiblement cylindrique et présentent des profondeurs différentes. Les vues en coupe et perspective des figures 4 et 5 montrent plus précisément les trois marqueurs M1 à M3 et leurs différentes profondeurs P1 à P3. Les marqueurs sont cylindriques à parois polyédriques. Ils se succèdent avec une profondeur croissante. L'écart de profondeur entre deux marqueurs adjacents est constant et quantifié : il correspond à une unité d'avancement d'usure calibrée. Dans l'exemple, le quanta de profondeur est de 0,2 mm et les profondeurs des marqueurs M1 à M3 sont successivement égales à 0,2, 0,4 et 0,6 mm. Lors d'examens du couvercle - par endoscopie par exemple - le degré d'avancement d'usure du couvercle se situe entre 0 et 0,2 mm si aucun marqueur n'a disparu, entre 0,2 et 0,4 mm si le marqueur M1 a disparu, et entre 0,4 et 0,6 mm si le marqueur M2 disparaît.

La disparition du marqueur M2 déclenche alors une inspection des pièces du compresseur dans la mesure où une telle érosion du couvercle signale, par extrapolation suivant le type de moteur et le profil d'utilisation, une érosion critique des pales du rouet. Une telle érosion critique correspond à une limite d'utilisation qui nécessite alors un remplacement des pièces érodées.

Afin d'affiner la mesure de l'état d'usure du couvercle et donc des autres pièces, un plus grand nombre de marqueurs par groupe avec une quantification de profondeur plus faible, par exemple 0 ,1 mm peut être mis en oeuvre.

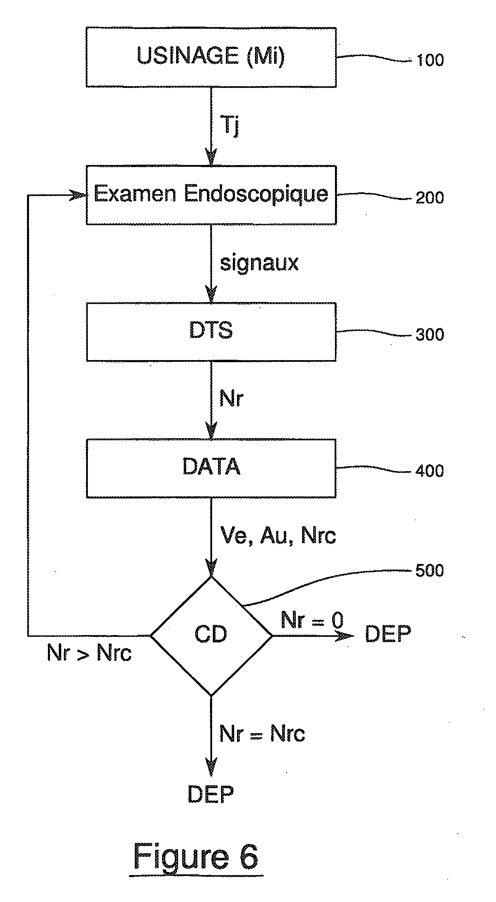

L'organigramme de la figure 6 illustre un exemple de succession d'étapes pouvant être mise en oeuvre dans le cadre du procédé de suivi de l'usure d'un compresseur donné selon l'invention. Dans cet exemple, des marquages - tels que les groupes de marqueurs G3 à G5 comportant « i » marqueurs Mi, « i » étant égal ou supérieur à 3, par exemple égal à 4 ou 5 - sont usinés dans le revêtement abradable du coude du couvercle (étape 100). Plus généralement, plus de trois groupes peuvent être usinés.

Des examens par endoscopie sont ensuite successivement effectués dans le temps (étape 200), par exemple après chaque mission séparée de durées Tj. A chaque examen, l'endoscope est introduit dans le compresseur en suivant des cheminements prévus jusqu'à positionner l'extrémité active de l'endoscope en regard de chacun des trois groupes G3 à G5 dans l'exemple et fournir des signaux d'image des marqueurs Mi.

Un dispositif de traitement du signal DTS reçoit les signaux endoscopiques. Le dispositif établit alors le nombre de marqueurs restants Nr par groupe (étape 300) et applique un critère de décision CD de dépose moteur en fonction de ce nombre. Le résultat de cette application est fourni à un opérateur.

Lors des examens qui se succèdent dans le temps, une vitesse d'érosion « Ve » et un état d'avancement de l'usure « Au » du couvercle et des pales du rouet sont établis par le dispositif DTS en fonction du nombre de marqueurs restants Nr et des durées Tj. Ces données sont également mémorisées dans le dispositif de traitement (étape 400).

Pour ce faire, des données DATA sont également mémorisées dans le dispositif de traitement concernant : la répartition de l'érosion du couvercle, les corrélations d'usure en fonction de la configuration des moteurs entre les pièces de compresseur permettant d'extrapoler celle des pales du rouet à partir de celle du couvercle, les profils des missions de l'hélicoptère et la granulométrie des corps étrangers ingérés en fonction des missions, les résultats antérieurs de « Ve » et de « Au » concernant le moteur examiné ainsi que les résultats de « Ve » et de « Au » de moteurs en fonction de leurs conditions d'utilisation.

Le critère CD établit un nombre de marqueurs restants critique « Nrc » et interprète alors, en fonction des données DATA et du nombre de marqueurs critique « Nrc », le nombre de marqueurs restants « Nr » par groupe G3 à G5 en termes d'usure des pièces, en particulier des pales du rouet, (étape 500). Par exemple, il se peut que seul le nombre de marqueurs du groupe G2 soit critique. Tant que ce nombre est au moins égal à deux pour le groupe G4, il n'y a pas lieu de déposer le moteur, même si les autres groupes G3 et G5 ont un nombre de marqueur égal à un lors d'un examen. Ainsi, pour chaque moteur, un nombre de marqueurs restants critique « Nrc », au moins égal à un, est établi pour chaque groupe de marqueurs.

Lors de chaque examen, le nombre de marqueurs restants « Nr » par groupe G3 à G5 est déterminé. Si ce nombre « Nr » est égal à zéro pour au moins un groupe, le critère de décision prévoit la dépose immédiate du moteur « DEP » et le changement des pièces du compresseur exposées à l'usure (couvercle, pales du rouet, ailettes du diffuseur). Si le nombre Nr est égal à Nrc pour le groupe concerné, la dépose est également décidée.

Alternativement, les marqueurs peuvent ne pas être répartis en groupe, mais par exemple régulièrement répartis le long d'une méridienne du coude. Dans ce cas, le nombre Nrc est simplement égal à 1, sauf si la vitesse « Ve » ou l'avancement d'usure Au augmente sensiblement : le nombre Nrc passe alors à 2 pour éviter tout remplacement tardif des pièces.

L'invention n'est pas limitée aux exemples de réalisation décrits et représentés. Ainsi, les marqueurs peuvent être non alignés des creux dans un même groupe, par exemple selon des dispositions en V, en triangle, en carré, etc.

## Revendications

1. Compresseur centrifuge (1) de turbine à gaz (10) à entrée d'air radiale (5), comportant un rouet (10) équipé de pales (11) et un couvercle (12) d'écoulement de flux d'air (F1) dans les pales (11) et présentant une zone annulaire de coude (12a) dans une partie sensiblement médiane, **caractérisé en ce que** le couvercle (12) est recouvert d'un revêtement abradable, et **en ce que** dans la partie sensiblement médiane au moins un creux de marquage (M1 à M3, Mi) de profondeur déterminée (P1 à P3), dit marqueur, est usiné dans le revêtement abradable.

2. Compresseur centrifuge selon la revendication 1, dans lequel au moins deux (G1, G2), de préférence au moins trois groupes (G3 à G5) d'au moins deux, de préférence au moins trois marqueurs (M1 à M3), sont répartis régulièrement le long de la zone de coude (12a) du couvercle (12).

3. Compresseur centrifuge selon la revendication 2, dans lequel les marqueurs (M1 à M3) de chaque groupe (G1 à G5) ont des profondeurs initiales (P1 à P3) différentes et quantifiés.

4. Compresseur centrifuge selon l'une des revendications 2 ou 3, les marqueurs (M1 à M3) de chaque groupe (G3 à G5) sont en alignement dans ladite zone de coude (12a) et leur implantation choisie entre une méridienne (120), un rayon (121) et une ligne inclinée entre méridienne et rayon.

5. Compresseur centrifuge selon la revendication précédente, dans lequel les marqueurs (M1 à M3) d'un même groupe (G1 à G5) sont suffisamment rapprochés, à moins de 10 mm, pour être aptes à pouvoir subir le même type d'érosion.

6. Compresseur centrifuge selon l'une quelconque des revendications précédentes, dans lequel les marqueurs (M1 à M3, Mi) ont une ouverture maximale inférieure à 1 mm de manière à ne pas être bouchés par l'ingestion de corps étrangers, en particulier de grains de sable.

7. Compresseur centrifuge selon l'une quelconque des revendications précédentes, dans lequel les marqueurs (M1 à M3, Mi) sont de forme choisie entre une forme cylindrique, de préférence un lamage à base circulaire ou oblong, de calotte sphérique, de forme conique, et de rainurage.

8. Procédé de suivi d'usure d'un compresseur centrifuge du type décrit ci-dessus, **caractérisé en ce qu'**il comporte les étapes suivantes :
- au moins un marquage (M1 à M3, Mi) est réalisé par usinage (100) d'au moins un creux de profondeur (P1 à P3) déterminée dans le revêtement abradable du coude (12a) du couvercle ;
- des examens par endoscopie (200) sont successivement effectués dans le temps (Tj) ;
- à chaque examen, un endoscope est introduit dans le compresseur et une extrémité active de l'endoscope est positionnée en regard du ou des marquages (M1 à M3, Mi) pour fournir un signal d'image des marquages ;
- un traitement (DTS) du signal endoscopique (300) fournit un nombre de marquage(s) restant(s) (Nr) et un critère de décision (CD) de dépose moteur (500) est appliqué en fonction de ce nombre (Nr) et de données d'usure comparatives (DATA).

9. Procédé de suivi d'usure selon la revendication précédente, dans lequel les marquages (M1 à M3) présentent des profondeurs différentes (P1 à P3) et la différence entre deux profondeurs les plus proches est quantifiée en correspondance avec un degré d'avancement d'usure calibré.

10. Procédé de suivi d'usure selon l'une des revendications 8 ou 9, dans lequel les marquages (Mi) sont régulièrement répartis sur la circonférence du coude du couvercle (12a), individuellement ou par groupes (G3 à G5) d'au moins deux marquages, de préférence au moins trois (M1 à M3).

11. Procédé de suivi d'usure selon l'une quelconque des revendications 8 à 10, dans lequel une comparaison entre les dénombrements de marqueurs restants (Nr) lors d'examens successifs fournit (400) une mesure de la vitesse d'érosion (Ve) et un état d'avancement de l'usure du couvercle (Au) ainsi que, par extrapolation à partir de données (DATA) mémorisées relatives à des corrélations d'usure entre les pièces de compresseur, celui des autres pièces du compresseur.

12. Procédé de suivi d'usure selon la revendication précédente, dans lequel le critère de décision (CD) compare (500), à chaque examen, le nombre de marquages restants (Nr) à un nombre critique (Nrc) établi en fonction des données mémorisées (DATA) et le moteur est déposé pour le remplacement des pièces usées lorsque le nombre critique (Nrc) est atteint.

## Patentansprüche

1. Zentrifugalverdichter (1) für eine Gasturbine (10) mit radialem Lufteintritt (5), umfassend ein Spinnrad (10), das mit Schaufeln (11) versehen ist, und einen Deckel (12) zur Luftstromableitung (F1) in den Schaufeln (11), der eine ringförmige gebogene Zone (12a) in einem im Wesentlichen mittleren Teil aufweist, **dadurch gekennzeichnet, dass** der Deckel (12) mit einer abschleifbaren Beschichtung bedeckt ist, und dass in dem im Wesentlichen mittleren Teil mindestens ein Hohlraum zum Markieren (M1 bis M3, Mi) einer bestimmten Tiefe (P1 bis P3), Marker genannt, in der abschleifbaren Beschichtung bearbeiten ist.

2. Zentrifugalverdichter nach Anspruch 1, bei dem mindestens zwei (G1, G2), vorzugsweise mindestens drei Gruppen (G3 bis G5) von mindestens zwei, vorzugsweise von mindestens drei Markern (M1 bis M3) regelmäßig entlang der gebogenen Zone (12a) des Deckels (12) verteilt sind.

3. Zentrifugalverdichter nach Anspruch 2, bei dem die Marker (M1 bis M3) jeder Gruppe (G1 bis G5) unterschiedliche und quantifizierte Ausgangstiefen (P1 bis P3) haben.

4. Zentrifugalverdichter nach einem der Ansprüche 2 oder 3, bei dem die Marker (M1 bis M3) jeder Gruppe (G3 bis G5) in der gebogenen Zone (12a) ausgerichtet sind und ihre Anordnung zwischen einem Meridian (120), einen Radius (121) und einer zwischen Meridian und Radius geneigten Linie gewählt ist.

5. Zentrifugalverdichter nach dem vorhergehenden Anspruch, bei dem die Marker (M1 bis M3) einer selben Gruppe (G1 bis G5) nahe genug, weniger als 10 mm, sind, um geeignet zu sein, denselben Erosionstyp ertragen zu können.

6. Zentrifugalverdichter nach einem der vorhergehenden Ansprüche, bei dem die Marker (M1 bis M3, Mi) eine maximale Öffnung unter 1 mm haben, um nicht durch die Aufnahme von Fremdkörpern, insbesondere Sandkörnern, verstopft zu werden.

7. Zentrifugalverdichter nach einem der vorhergehenden Ansprüche, bei dem die Marker (M1 bis M3, Mi) eine Form haben, die zwischen einer zylindrischen Form, vorzugsweise einer Senkung mit kreisförmiger oder länglicher Basis, einer Kugelhaubenform, einer konischen Form und einer Rillenform ausgewählt ist.

8. Verfahren zur Verschleißkontrolle eines Zentrifugalverdichters vom oben beschriebenen Typ, **dadurch gekennzeichnet, dass** es die folgenden Schritte umfasst:
- mindestens eine Markierung (M1 bis M3, Mi) wird durch Bearbeitung (100) mindestens eines Hohlraums mit bestimmter Tiefe (P1 bis P3) in der abschleifbaren Beschichtung der Biegung (12a) des Deckels hergestellt;
- Prüfungen durch Endoskopie (200) werden nacheinander mit der Zeit (Tj) durchgeführt;
- bei jeder Prüfung wird ein Endoskop in den Verdichter eingeführt, und ein aktives Ende des Endoskops wird gegenüber der oder den Markierungen (M1 bis M3, Mi) positioniert, um ein Bildsignal der Markierungen zu liefern;
- eine Verarbeitung (DTS) des endoskopischen Signals (300) liefert eine Anzahl von Restmarkierungen (Nr), und ein Entscheidungskriterium (CD) über den Motorausbau (500) wird in Abhängigkeit von dieser Anzahl (Nr) und von vergleichenden Verschleißdaten (DATA) angewandt.

9. Verfahren zur Verschleißkontrolle nach dem vorhergehenden Anspruch, bei dem die Markierungen (M1 bis M3) unterschiedliche Tiefen (P1 bis P3) aufweisen, und der Unterschied zwischen zwei an nächsten liegenden Tiefen wird in Übereinstimmung mit einem geeichten Grand an Verschleißfortschritt quantifiziert.

10. Verfahren zur Verschleißkontrolle nach einem der Ansprüche 8 oder 9, bei dem die Markierungen (Mi) regelmäßig auf dem Umfang der Biegung des Deckels (12a) einzeln oder in Gruppen (G3 bis G5) von mindestens zwei Markierungen, vorzugsweise mindestens drei (M1 bis M3) verteilt sind.

11. Verfahren zur Verschleißkontrolle nach einem der Ansprüche 8 bis 10, bei dem ein Vergleich zwischen den Auszählungen von Restmarkern (Nr) bei aufeinanderfolgenden Prüfungen ein Maß für die Erosionsgeschwindigkeit (Ve) und einen Zustand des Fortschreitens des Verschleißes des Deckels (Au) sowie durch Extrapolation aus gespeicherten Daten (DATA) in Bezug auf die Verschleißkorrelationen zwischen den Verdichterteilen jenes der anderen Teile des Verdichters liefert (400).

12. Verfahren zur Verschleißkontrolle nach dem vorhergehenden Anspruch, bei dem das Entscheidungskriterium (CD) bei jeder Prüfung die Anzahl von Restmarkern (Nr) mit einer kritischen Anzahl (Nrc) vergleicht (500), die in Abhängigkeit von den gespeicherten Daten (DATA) erstellt wird, und der Motor für den Ersatz der abgenutzten Teile, wenn die kritische Anzahl (Nrc) erreicht ist, abgebaut wird.

## Claims

1. Centrifugal compressor (1) of a gas turbine (10) with a radial air inlet (5), including an impeller (10) provided with blades (11) and a casing (12) for the flow of the air stream (F1) in the blades (11) and having an annular elbow zone (12a) in a substantially median part, **characterised in that** the casing (12) is covered with an abradable coating, and **in that** in the substantially median part, at least one marking depression (M1 to M3, Mi) of a predetermined depth (P1 to P3), known as a marker, is machined in the abradable coating.

2. Centrifugal compressor according to Claim 1, wherein at least two (G1, G2), preferably at least three groups (G3 to G5) of at least two, preferably at least three markers (M1 to M3) are distributed regularly along the elbow zone (12a) of the casing (12).

3. Centrifugal compressor according to Claim 2, wherein the markers (M1 to M3) of each group (G1 to G5) have different and quantified initial depths (P1 to P3).

4. Centrifugal compressor according to Claim 2 or 3, wherein the markers (M1 to M3) of each group (G3 to G5) are aligned in said elbow zone (12a) and the installation thereof is chosen between a meridian (120), a radius (121) and a line inclined between the meridian and the radius.

5. Centrifugal compressor according to the preceding claim, wherein the markers (M1 to M3) of one and the same group (G1 to G5) are sufficiently close together, less than 10 mm apart, to be able to undergo the same type of erosion.

6. Centrifugal compressor according to any one of the preceding claims, wherein the markers (M1 to M3, Mi) have a maximum aperture of less than approximately 1 mm so as not to be blocked by the ingestion of foreign bodies, in particular grains of sand.

7. Centrifugal compressor according to any one of the preceding claims, wherein the markers (M1 to M3, Mi) have a shape chosen from among a cylindrical shape, preferably a bore with a base which is circular or oblong, a spherical segment, of conical shape, and grooving.

8. Method of monitoring wear on a centrifugal compressor of the type described above, **characterised in that** it includes the following steps:
- at least one marker (M1 to M3, Mi) is produced by machining at least one depression (P1 to P3) of a predetermined depth in the abradable coating of the elbow (12a) of the casing;
- examinations by endoscopy (200) are successively performed over time (Tj);
- for each examination, an endoscope is introduced into the compressor and an active end of the endoscope is positioned facing the marker(s) (M1 to M3, Mi) in order to provide an image signal of the markers;
- processing (DTS) the endoscopic signal (300) supplies a number of remaining markers (Nr) and a criterion for decision (CD) on removing the engine (500) is applied as a function of this number (Nr) and of comparative wear data (DATA).

9. Method of monitoring wear according to the preceding claim, wherein the markers (M1 to M3) have different depths (P1 to P3) and the difference between the closest two depths is quantified according to a calibrated degree of advance of wear.

10. Method of monitoring wear according to one of Claims 8 or 9, wherein the markers (mi) are regularly distributed over the circumference of the elbow of the casing (12a), individually or in groups (G3 to G5) of at least two markers, preferably at least three (M1 to M3).

11. Method of monitoring wear according to any one of Claims 8 to 10, wherein a comparison between the counts of remaining markers (Nr) during successive examinations supplies (400) a measurement of the speed of erosion (Ve) and progress of the wear on the casing (Au) as well as, by extrapolating from stored data (DATA) relating to correlations of wear between the compressor parts, that of the other parts of the compressor.

12. Method of monitoring wear according to the preceding claim, wherein for each examination, the decision criterion (CD) compares (500) the number of remaining markers (Nr) with a critical number (Nrc) established as a function of the stored data (DATA) and the engine is removed for the replacement of the worn parts when the critical number (Nrc) is reached.
